# NEW EUROPEAN PATENT SPECIFICATION

(11) **EP 2 394 340 B2**
(45) Date of publication and mention of the opposition decision: **14.08.2019**
(45) Mention of the grant of the patent: 12.10.2016
(21) Application number: 10705322.5
(22) Date of filing: 02.02.2010
(51) Int. Cl.: H02G 3/22, F16L 5/00

(54) **SEALING SYSTEM**
DICHTUNGSANORDNUNG
SYSTÈME D'ÉTANCHÉITÉ

(30) Priority: 04.02.2009 SE 0950040
(43) Date of publication of application: 14.12.2011
(73) Proprietor: Roxtec AB, 371 23 Karlskrona (SE)
(72) Inventor: ANDERSSON, Jens, S-370 23 Hasslö (SE); ERICSON, Mats, S-374 51 Asarum (SE); FILIPSEN, Jenny, S-371 31 Karlskrona (SE); HILDINGSSON, Ulf, S-370 24 Nättraby (SE); LUNDBORG, Christer, S-371 32 Karlskrona (SE); MILTON, Stefan, S-373 02 Ramdala (SE); PETTERSSON, Ronnie, S-373 00 Jämjö (SE); ÅKESSON, Jörgen, S-371 94 Lyckeby (SE)
(74) Representative: Ström & Gulliksson AB
(86) International application number: PCT/EP2010/051243
(87) International publication number: WO 2010/089291

(56) References cited:
- WO-A1-95/31025
- WO-A1-03/052895
- WO-A2-01/42046
- DE-A1- 3 635 593
- DE-A1-102005 002 879
- US-A- 4 889 298

## Description

### Technical Field

The present invention relates to a sealing system for cable entries or pipe penetrations, said system comprising compressible modules arranged in frame using a compression unit for achieving an adequate seal.

### Background

In the prior art there are cable transitions or the like having a frame, inside which a number of modules to receive cables, wires or pipes are placed. The modules are made of an elastic material e.g. rubber or plastics and are thus compressible. Inside the frame normally a number of modules are received side by side in one or more rows together with some kind of compression unit. The compression unit is placed between the frame and the modules in such a way that when the compression unit is expanded the compressible modules will be compressed around the cables, wires or pipes. For ease of description the expression "cable" is mainly used in this description, but it should be construed broadly and a person skilled in the art realises that it normally also covers pipes or wires.

Another type of seal, cable transition, pipe penetration etc. has a general cylindrical form and is to be received in a sleeve in a wall or an opening in a wall. To function in the desired way the seal should fit snugly into the sleeve or the opening of the wall in which it is received and the seal should be adaptable to the actual mounting dimension. The mounting dimension is dictated by the inner diameter of the sleeve or the opening. The seal has a cylindrical compressible body, which is compressed axially between fittings at the opposite ends of the compressible body. By the axial compression the cylindrical body will expand radially both inwards and outwards.

Furthermore, the pipes, wires or cables received may have different outer diameters, and, thus, the module should be adaptable to cables or pipes having different outer diameters.

Seals or transitions of both the above kinds are used for sealing in many different environments, such as for cabinets, technical shelters, junction boxes and machines. They are used in different industrial environments, such as automotive, telecom, power generation and distribution, as well as marine and offshore. The seals or transitions may have to seal against fluid, gas, fire, rodents, termites, dust, moisture etc., and may receive cables or wires for electricity, communication, computers etc., pipes for different gases or liquids such as water, compressed air, hydraulic fluid and cooking gas or wires for load retention.

The parts receiving a single cable etc. of both the types discussed above often have a pack of peelable layers or sheets on the inside. The layers or sheets are peeled off until the inner diameter of the part is adapted to the outer diameter of the cable received in said part. The sheets adhere strong enough to each other to stay together and at the same time loose enough to enable the sheets to be peeled off from the stack, either one-by-one or a number of sheets together. In some embodiments there are also peelable layers or sheets on the outside, making it possible to adapt the outer dimensions of for instance a circular seal to a specific opening or sleeve.

A person skilled in the art realises that the exact shape and form of the different parts, including the layers, may vary without departing from the gist of the present invention. For example the pack of layers may have another cross sectional form than circular.

DE 36 35 593 shows a sealing system according to the preamble of claim 1

WO 01/42046 relates to a cable grommet that consists of two parts that can be intimately joined. The cable grommet has at least one continuous passage in which at least one single-piece strain relief is disposed which is mounted in a base body of high component density.

DE 10 2005 002879 shows a bulkhead having a frame formed of four parts enclosing rubber modules. The modules have a dimension larger than the interior of the frame. The modules and the frame have diagonally arranged tongue and groove system.

US 4 889 298 shows a feedthrough fitting, which seals around at least one conduit extending longitudinally through a wall opening. The fitting comprises a plurality of elastomeric blocks, each extending the full width of the wall opening.

WO 03/052895 relates to a cable transit device comprising a clamping frame and a number of blocks, which together fill out the frame. Each block has a through opening for receiving a cable and a through slot to enable the block to be laterally fitted to the cable.

WO 95/31025 shows an electrical cable penetration seal apparatus which include a compliant module having inner and outer regions of different durometer characteristics.

### Summary

The present invention aims at providing an improved sealing system for cable entries or pipe penetrations according to claim 1

The flange/groove combination makes it possible to retain the compressible modules in the frame without using stay plates between each row of modules, which is the prior art solution. In cases where the stay plates are made of metal, and as such conduct heat more efficiently than the compressible modules, the removal of the stay plates confers improved thermal insulation to the sealing system. Further, not having to handle the stay plates during assembly of a frame will reduce the assembly time.

The sealing system may comprise at least one row of compressible modules, each module extending between opposing sides of the frame, and comprising at least one opening for receiving cables or pipes. Using this type of compressible module speeds up and simplifies the assembly process, since a whole row is arranged at the same time. Further, the leakage risk is reduced, since the number of opposing surfaces is reduced and since the dimensional tolerance may be improved, which will be elucidated in the following. Since the compressible modules of today are arranged side-by-side to form a row in e.g. a frame the dimensional tolerance of the entire row will differ from the dimensional tolerance of an individual compressible module. The latter is set during manufacture, and since the former will be a sum of several individual tolerances it will in effect not be as good. Thus, if a single compressible module is used in a row, manufactured with the same precision as it is today, the tolerance of the particular row will be improved. Consequently the tolerance may be improved while the precision in manufacturing is maintained. This fact may also be used to maintain the tolerance of a single row, with reduced precision during manufacturing, which will result in a more cost efficient manufacturing process.

Further embodiments and advantages are described in the following detailed description of exemplifying embodiments, and are defined by the appended claims.

### Brief Description of the Drawings

Figs. 1-5 are a series of drawings illustrating a first embodiment of the present invention.
Figs. 6-10 are a series of drawings illustrating a second embodiment of the present invention.

### Detailed Description of Embodiments

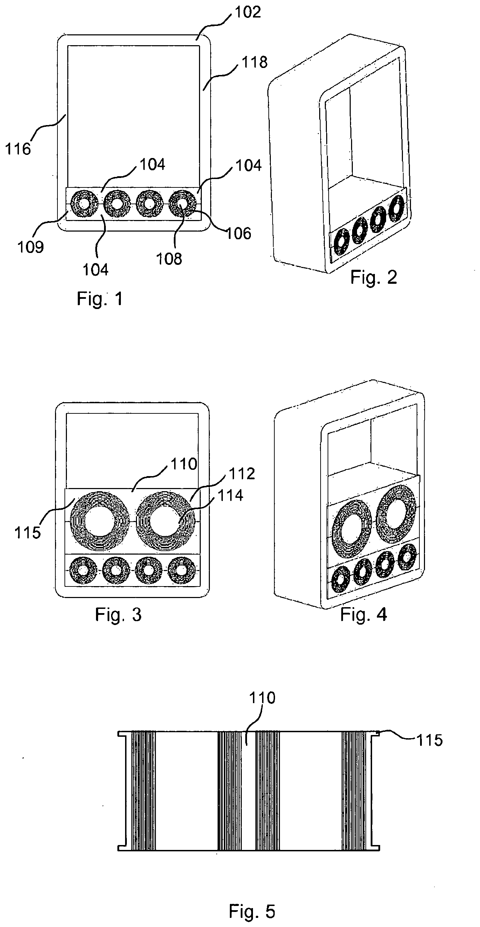

Fig. 1 is a front view of a sealing system according to a first embodiment of the present invention. It shows a frame 102 in which a sealing module 104 is arranged. The front side of the frame is shown. In the following "inwardly", "radially inwards" etc will correspond to a direction directed towards the center of the frame, as shown in Fig. 1; "outwardly", "radially outwards" the opposite direction; "axial" corresponds to the direction normal to the illustration of Fig. 1 (into, and out of, the paper), generally normal to a plane defined by the edges of the frame 102. The sealing module 104 comprises two base parts having a width corresponding to the width of the frame, in this case 120 mm, having semicircular grooves, which when assembled define circular openings. It is obvious that the present invention also encompasses other widths, and as have been mentioned earlier, other cross sections. On the inside of each groove, peelable sheets 106 are arranged. The peelable sheets may be removed from a groove in order to adapt the sealing module 104 for reception of a cable or pipe of a certain diameter. In an installation not all openings are occupied by a cable or pipe, room may be left for future installations. For this reason the center of each opening, not occupied by peelable sheets 106, is filled by a blind 108 or core, in order to enable the provision of a tight seal. Fig. 2 is a perspective view of the arrangement of Fig. 1.

Other embodiments of the modules which do not fall within the scope of the invention are given in the simultaneously filed applications entitled "Eccentric Part of a Pipe or Cable Lead-Through", "A Module of a Pipe or Cable Lead-Through having Grooves on Opposite Sides", "Pipe or Cable Lead-Through Blocks", "A Pipe or Cable Lead-Through having Modularized Modules", "A Pipe or Cable Lead-Through having Penetrateable Modules", "A Pipe or Cable Lead-Through having Modules with a Dimensioning Function" and "A Pipe or Cable Lead-Through having Layers of Alternating Geometry", filed by the applicant of the present application. In one embodiment the modules are separated from a stack of module halves sticking together, as described in the simultaneously filed application named "Modules of Pipe or Cable Lead-Through Sticking Together", filed by the applicant of the present application.

The sheets may be arranged in many different ways and with different features as reflected in the simultaneously filed applications entitled "A Pipe or Cable Lead-Through having Interconnected Layers", "A Pipe or Cable Lead-Through having Layers of Different Thickness", "A Pipe or Cable Lead-Through having a Part Indicating Compression", "Cohering Between Layers of a Pipe or Cable Lead-Through" and "Identification of Layers of a Pipe or Cable Lead-Through", filed by the applicant of the present application.

In Fig. 3 a subsequent row consisting of a sealing module 110 has been arranged. The sealing modules 104 and 110 are arranged in direct contact with each other, preferably with lubricant in between in order to improve load distribution during compression. The construction of the sealing module 110 is similar to the one of sealing module 104, though the latter is designed for receiving cables or pipes having a smaller diameter than the former. Fig. 4 is a perspective view of the arrangement of Fig. 3. The use of one sealing module 104, 110 for the entire width of the frame 102, as oppose to several sealing modules placed side by side, gives room for a higher number of cable entries per surface area.

Flanges 109, 115 are arranged on the sealing modules 104, 110, generally formed in one piece with the same. The flanges extend radially outwards for cooperation with opposing sides 116, 118 of the frame 102. In Fig. 5 a base part of a sealing module 110 is shown in plan view. The flanges 109, 115 will create a fixation between the sealing modules and the frame, and prevent the modules from moving in an axial direction.

As a last component, generally, a compression unit (not shown) is arranged in the frame 102, and the compressible sealing modules are compressed to form a tight seal around cables or pipes arranged therein. There are several options for compression units, and they may be provided as separate components or as components integrated in the frame. The present invention is obviously not limited to any particular type of compression unit.

In alternative embodiments the seal, lead-through or transit of the present invention is furnished with means for lubrication as shown in the simultaneously filed application entitled "Lubrication of a Pipe or Cable Lead-Through", filed by the applicant of the present application. This application is hereby incorporated by reference.

Prior to compression the sealing modules 104, 110 are resilient enough to allow for insertion into the frame 102. This may be performed by tilting the modules slightly and then pushing them into place.

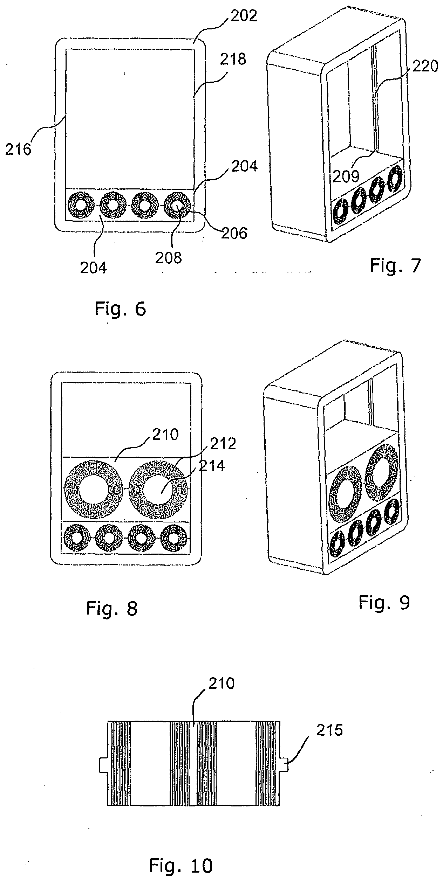

Figs. 6-10 are similar to Figs. 1-5 but they show a second embodiment of the invention. In this embodiment the sealing modules 204, 210 are provided with flanges 209, 215 are arranged to cooperate with a groove 220 on the inside of the first and second side 216, 218 of the frame 202. In this embodiment also, the flanges are formed in one piece with the sealing modules 204, 210. As shown in the Figs. the flanges 209, 215 of the sealing modules 204, 210 and the grooves 220 of the frame 202 are placed in the middle of the contact surfaces. In other embodiments the cooperating flanges and grooves are placed at other positions of the contact surfaces.

Since the resemblance between the embodiments is immediate, exaggerated use of reference numbers has been avoided.

The design of the second embodiment is slightly more elaborate, since it requires a specific type of frame. However, when the sealing modules are compressed their resilience will decrease, and it will consequently be difficult to force the flange out of the groove. Further, in this embodiment, as well as in similar designs, conditions for improved electrical contact between the frame and a module situated therein prevails.

The arrangement of the flange and optional groove may be inverted, such that the flange of the first embodiment is replaced by an inwardly extending flange on the frame, and so forth.

Combinations of the above, or embodiments having several grooves/flanges are also possible within the scope of the appended claims.

Suitable material for the modules and other components are defined in previous applications by the same applicant, and include resilient materials such as rubber, an example being a halogen free cross linkable rubber compound based on Ethylene-Propylene rubber (EPDM). Other alternatives are possible within the scope of the claims, as would be appreciated by the skilled person.

In further embodiments the modules and/or the frame has means to give improved EMC (electromagnetic compatibility) properties. In still further embodiments the modules and/or the frame have intumescent material to increase fire resistance.

Generally, the above embodiments may be used with or without stay plates, preferably without. Embodiments are also foreseen where the stay plate is formed in one piece with the compressible module 104, such that each base part has an embedded or partially embedded structural reinforcement of a material with higher rigidity, such as plastics, e.g. polycarbonate, metal, composites etc. The stay plate may also be attached to the compressible module by means of an adhesive. The use of a material other than metal, results in a more straightforward recycling of used components. According to connected aspect of the present invention the compressible module and the stay plate attached thereto or embedded therein may have a length in an axial direction exceeding the corresponding extension of the frame in the same direction. With this arrangement the seal within the constraints of the frame will be fulfilled in the same manner as before, yet the fire resistance of the sealing system will greatly improve.

## Claims

1. A sealing system for cable entries or pipe penetrations comprising a frame (102), one or more compressible modules (104, 110) and at least one compression unit to compress the compressible modules (104, 110), whereby the frame receives the one or more compressible modules surrounding each cable or pipe, whereby a barrier is formed of the one or more modules and at least one compression unit inside the frame, wherein each compressible module has at least one opening provided with at least one peelable layer (106) for adapting to the diameter of a cable or pipe, which at least one peelable layer is placed in a profile, **characterized in that** the length of each compressible module (104, 110) in the axial direction exceeds the extension of the frame (102) in the same direction and that each compressible module (104, 110) comprises flanges (109, 115) extending radially outwards for cooperation with opposing outer sides of the frame (102), so as to obstruct movement in an axial direction and that at least one compressible module (104, 110) comprises a structural reinforcement embedded in said at least one compressible module (104, 110).

2. The system of claim 1, wherein one row is occupied by a single compressible module (104, 110) having at least one opening for a cable or pipe.

## Patentansprüche

1. Dichtungssystem für Kabeleinführungen oder Rohrdurchführungen mit einem Rahmen (102), einem oder mehreren kompressiblen Modulen (104, 110) und zumindest einer Kompressionseinheit zum Komprimieren der kompressiblen Module (104, 110), wobei der Rahmen das eine oder die mehreren kompressiblen Module aufnimmt, die jedes Kabel oder Rohr umgeben, wodurch eine Barriere aus dem einen oder den mehreren Modulen und zumindest einer Kompressionseinheit innerhalb des Rahmens gebildet ist, wobei jedes kompressible Modul zumindest eine Öffnung aufweist, die mit zumindest einer ablösbaren Schicht (106) zum Anpassen an den Durchmesser eines Kabels oder Rohrs versehen ist, wobei die zumindest eine ablösbare Schicht in einem Profil angeordnet ist, **dadurch gekennzeichnet, dass** die Länge jedes kompressiblen Moduls (104, 110) in der axialen Richtung die Erstreckung des Rahmens (102) in der gleichen Richtung überschreitet und dass jedes kompressible Modul (104, 110) Flansche (109, 115) aufweist, die sich radial nach außen erstrecken, zum Zusammenwirken mit gegenüberliegenden Außenseiten des Rahmens (102), so dass eine Bewegung in einer axialen Richtung verhindert ist, und dass zumindest ein kompressibles Modul (104, 110) eine strukturelle Verstärkung aufweist, die in dem zumindest einen kompressiblen Modul (104, 110) eingebettet ist.

2. System nach Anspruch 1, **dadurch gekennzeichnet, dass** eine Reihe durch ein einzelnes kompressibles Modul (104, 110) belegt ist, welches zumindest eine Öffnung für ein Kabel oder ein Rohr aufweist.

## Revendications

1. Système d'étanchéité pour des entrées de câble ou des percées de conduite comprenant un cadre (102), un ou plusieurs modules compressibles (104, 110) et au moins une unité de compression pour comprimer les modules compressibles (104, 110), moyennant quoi le cadre reçoit les un ou plusieurs modules compressibles entourant chaque câble ou conduite, moyennant quoi une barrière est formée des un ou plusieurs modules et d'au moins une unité de compression à l'intérieur du cadre, dans lequel chaque module compressible comporte au moins une ouverture pourvue d'au moins une couche pelable (106) pour s'adapter au diamètre d'un câble ou d'une conduite, laquelle au moins une couche pelable est placée dans un profil, **caractérisé en ce que** la longueur de chaque module compressible (104, 110) dans la direction axiale dépasse l'extension du cadre (102) dans la même direction et **en ce que** chaque module compressible (104, 110) comprend des brides (109, 115) s'étendant radialement vers l'extérieur pour coopérer avec des côtés externes opposés du cadre (102), de façon à bloquer un déplacement dans une direction axiale et **en ce qu'**au moins un module compressible (104, 110) comprend un renfort structurel encastré dans ledit au moins un module compressible (104, 110).

2. Système selon la revendication 1, dans lequel une rangée est occupée par un seul module compressible (104, 110) comportant au moins une ouverture destinée à un câble ou une conduite.
